# EUROPEAN PATENT SPECIFICATION

(11) **EP 2 959 715 B1**
(45) Date of publication and mention of the grant of the patent: **05.10.2016**
(21) Application number: 13705784.0
(22) Date of filing: 22.02.2013
(51) Int. Cl.: H04L 29/06, H04W 28/02, H04N 21/24, H04N 21/61, H04W 4/20

(54) **MEDIA DISTRIBUTION NETWORK WITH MEDIA BURST TRANSMISSION CAPABILITIES**
MEDIENVERTEILUNGSNETZWERK MIT MEDIEN-BURST-ÜBERTRAGUNGSKAPAZITÄT
RÉSEAU DE DISTRIBUTION MULTIMÉDIA À CAPACITÉS DE TRANSMISSION DE SALVES DE DONNÉES MULTIMÉDIAS

(43) Date of publication of application: 30.12.2015
(73) Proprietor: Telefonaktiebolaget LM Ericsson (publ), 164 83 Stockholm (SE)
(72) Inventor: SKOG, Robert, S-165 76 Haesselby (SE); ERIKSSON, Ann-Christine, S-749 42 Enköping (SE); LOHMAR, Thorsten, 52074 Aachen (DE); MATUTE ARRIBAS, Victoria, 52064 Aachen (DE); SINTORN, Mathias, S-191 41 Sollentuna (SE)
(74) Representative: Ericsson
(86) International application number: PCT/EP2013/053616
(87) International publication number: WO 2014/127832

(56) References cited:
- WO-A1-2012/167416
- US-A1- 2012 069 829
- ERICSSON ET AL: "Impact of video streaming traffic on LTE", 3GPP DRAFT; R2-114313 IMPACT OF VIDEO STREAMING TRAFFIC ON LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050540044,

## Description

### Technical Field

The present disclosure relates to aspects of media distribution network in which media data are transmitted in media bursts to a media client. A media burst is followed by an idle period in which no media data are transmitted.

### Background

Conventional media distribution networks comprise one or multiple media clients connected via a wired or wireless communication network to a media server. With the recent bandwidth increases of such communication networks, also the volume of consumed media data has grown substantially, and new media applications have evolved. Such media applications include video-on-demand, live streaming, and so on.

Various approaches have been proposed to efficiently make use of the bandwidth capabilities of modern communication networks for media data distribution. One such approach described in US 2012/0069829 A1 is the transmission of a media file in individual media bursts over a broadband channel. The adoption of a bursty transmission scheme becomes possible since the channel bandwidth is typically greater than the bandwidth actually required for live consumption of the media data (e.g., in a streaming scenario).

In the transmission scheme suggested in US 2012/0069829 A1, each media burst is followed by a pause. The pause constitutes an idle period in which no media data are transmitted. The aggregated durations of each media burst and the idle period that follows define a so-called window period. The duration of the window period is in a range from 100 ms to 1000 ms. The idle period is 50% or less of the window period. During the idle period, the broadband channel may be released, and a waste of transmission resources can thus be avoided.

Burst generation and burst transmission are performed under control of a dedicated gateway function. The gateway function is in one variant incorporated into a media server. In another variant, the gateway function is installed on a dedicated proxy node between the media server and the media clients.

Documents WO 2012/167416 A1 and 3GPP discussion paper XP050540044 represent further related prior art.

### Summary

There is a need for a technique that permits to efficiently implement a bursty transmission scheme in a media distribution network.

According to one aspect, there is provided a method according to claim 1 of operating a network node in a media distribution network in which media data are transmitted in media bursts to a buffer of a media client, wherein a media burst is followed by an idle period in which no media data are transmitted. The method comprises determining a fill level of the media client buffer and generating a media burst, wherein media burst generation includes adjusting at least one of a media data volume of the media burst and a duration of the idle period following the media burst dependent on the fill level. Determining the fill level may comprise estimating the fill level of the media client buffer based on a buffering model. The buffering model may take into account a volume of transmitted media data on the one hand and a buffer draining rate at the media client on the other. As an example, the network node may keep track of the volume of media data transmitted in previous bursts. The buffer draining rate at the media client may be estimated by the network node or signalled to the network node.

The buffering model in one variant takes into account compressed media time information associated with the media data. If, for example, the media data are provided in the form of a media file, that media file may comprise a compressed media time line with the corresponding information. Additionally, or as an alternative, the buffering model may take into account a wall clock time (e.g., as associated with playout of the media data).

In one implementation, the media burst comprises multiple individual media data transports to the media client. Each media data transport may comprise an individual media data segment.The aggregated sizes of the media data transports transported during an individual media burst may define the media data volume of that media burst.

According to one example, each media data transport conveys an individual transport layer data segment. If, as an example, the Transmission Control Protocol (TCP) is used on the transport layer, a media burst may comprise multiple TCP segments. The multiple TCP segments of a media burst may be transmitted via a single TCP connection from the network node to the media client.

During the media burst, the fill level of the media client buffer may once or repeatedly be determined. As an example, such a determination may occur after each individual media data transport or after multiple (e.g., a predefined number) of media data transports have occurred.

The media data volume of the media burst may be adjusted by terminating the media data transports dependent on the fill level of the media client buffer. A target media data volume (e.g., with respect to a remaining playout time of the buffered media data) may be defined based on that fill level. Once the aggregated media data volume transmitted in previous media data transports equals or exceeds the target media data volume, the media data transports for the burst (and thus the burst) may be terminated.

The media data transports may individually be acknowledged by the media client. Accordingly, the network node may receive an acknowledgement of receipt of an individual media data transport. As understood herein, the acknowledgement may be positive (meaning that the media client acknowledges successful receipt of a media data transport) or negative (meaning that the media client informs the network node that a media data transport has not been received).

Receipt of an acknowledgement may in certain scenarios trigger the next media data transport. In the case of a positive acknowledgment, new media data are transmitted with the next media data transport, and in the case of a negative or missing positive acknowledgement, previously transmitted media data are re-transmitted with the next media data transport. Depending on whether or not the target media data volume of the media burst has been transmitted, the next media data transport may either be sent after or before the upcoming idle period.

At the end of the media burst (e.g., in response to acknowledgement of receipt of the last media data transport within a burst), an idleness timer may be started to define the idle period. After expiry of the idleness timer, the next media burst may be generated for transmission. The idleness timer, and thus the duration of the idle period, may be set to a value that is constant or variable (e.g., during a specific media data distribution session such as a media file download).

The aggregated durations of the media burst and the idle period that follows the media burst may define a time window. In one variant, successive time windows have variable durations.

As said, the media data volume of each media burst is adjusted dependent on the fill level of the media client buffer. Due to fill level variations, successive media bursts may thus have variable media data volumes. Consequently, the variable durations of the time windows may depend at least partially on the variable media data volumes that need to be transported therein.

The media burst may be transmitted at a first bitrate, and the media client buffer may be drained at a second bitrate. The first bitrate may at least on the average be higher than the second bitrate. As an example, the first bitrate may exceed the second bitrate by a factor of 2, 3 or higher. In one variant, the first bitrate may be determined by a bitrate available for (e.g., allocated to) a communication link terminating at the media client. The communication link may start at an access network node via which the media client is attached to a network comprising the network node providing the media data.

The adjustment of the media data volume may take into account one or more constraints. The following examples may be combined as needed.

The media data volume may be adjusted dependent on the first bitrate at which the media burst is transmitted or the second bitrate at which the media client buffer is drained. In one implementation, the adjustment of the media data volume takes into account both the first bitrate and the second bitrate (e.g., a ratio between the first bitrate and the second bitrate).

The media data volume may be adjusted so that there will be no media client buffer underrun during the idle period following the media burst. To this end, the media data volume may be adjusted taking into account at least one of the following parameters: the current fill level of the media client buffer, the second bitrate at which the media client buffer is drained and a scheduled or expected idle period duration.

In one variant, the media data volume is adjusted such that the client buffer is fully filled to avoid a media client buffer underrun during the following idle period.

The media data volume may be adjusted so that the idle period following the media burst will not fall below a first duration. Generally, the first duration may be above 1s. As an example, the first duration may be above 2s, 5s, 10s or 15s. In one variant, the media data volume is adjusted so that the idle period will have the first duration. The duration of the idle period may thus be fixed. According to another variant, the media data volume is adjusted so that the idle period will have a variable duration (that will typically not fall below the first duration).

The first duration may be selected to permit the media client to initiate one or more power saving measures. As an example, the first duration may be selected to permit the media client to transit from a first state of power consumption into a second state of power consumption during the idle period. The first state is associated with a higher power consumption than the second state. The first state and the second state may belong to a set of two or more radio channel states such as states of a Radio Resource Control (RRC) protocol implemented by the media client.

The first duration may generally be selected dependent on access network and/or media client settings. As an example, the first duration may be selected dependent on (e.g., to be longer than) one or more inactivity timer settings at the media client. The inactivity timer setting may control a transition of the media client between different power consumption states. In one realization, the settings of RRC inactivity timers may be taken into account when selecting the first duration.

The media data volume may be adjusted so that the media data volume of the burst does not exceed a threshold. Additionally, or as an alternative, the media data volume may be adjusted so that a media burst duration does not exceed a threshold. If the media data volume threshold and/or the media burst duration threshold are/is attained or exceeded, the duration of the idle period may be reduced from a second duration to a third duration. Preferably, the third duration is not lower than the first duration.

The method may further comprise transmitting the media burst towards a media client. A media burst may be transmitted via a TCP connection or any other connection.

The media data may comprise one or both of audio data and video data. The media data to be transmitted may take the form of a media file (e.g., a multimedia clip). The media file may be transmitted in a download session from the media server to the media client. As such, the media client may fetch the media file from the media server either directly or via an intermediate node.

The media burst may be transmitted during a download session. As an example, the media burst may be transmitted during a Hypertext Transfer Protocol (HTTP) or other progressive download session. In one variant, the media client starts rendering or otherwise using the downloaded media data in the progressive download session before the download has been completed.

According to another aspect, a method according to claim 9 of operating a media client in a media distribution network in which media data are transmitted in media bursts to a buffer of the media client is provided. A media burst is followed by an idle period in which no media data are transmitted, and the method comprises receiving a media burst, wherein at least one of a media data volume of the media burst and a duration of the idle period following the media burst is dependent on a fill level of the media client buffer.

The media data volume of the received media burst may be adjusted such that there will be no buffer underrun in the idle period following the media burst. Consequently, there may be a correlation between the media data volume transported in a specific media burst and the idle period duration following that media burst.

The method may further comprise transiting, by the media client, from a first state of power consumption into a second state of power consumption during the idle period. The first state is associated with a higher power consumption than the second state. In one implementation, the transit is controlled by at least one inactivity timer of the media client. There may exist a correlation between a setting of the at least one inactivity timer and the duration of the idle period.

Also provided is a computer program product according to claim 10 comprising program code portions for performing the methods or method aspects disclosed herein when the computer program product is executed by a computing device. The computer program product may be stored on a computer-readable recording medium, such as a CD-ROM, DVD or semiconductor memory. The computer program product may also be provided for download via a communication network.

Further provided is a network node according to claim 12 for a media distribution network in which media data are transmitted in media bursts from a media server to a buffer of a media client, wherein a media burst is followed by an idle period in which no media are transmitted. The network node comprises a component configured to determine a fill level of the media client buffer, and the generator configured to generate a media burst. Generation of the media burst includes adjustment of at least one of a media data volume of the media burst and a duration of an idle period following the media burst dependent on the fill level.

The network node is in one implementation configured as a media server. In another implementation, the network node is configured as a proxy node for location between a media server and one or more media clients.

The network node may comprise an idleness timer configured to define the idle period between two successive media bursts. The adjustment of the media data volume may be correlated with a setting of the idleness timer.

Still further, a media client according to claim 13 for a media distribution network in which media data are transmitted in media bursts to the media client is provided. A media burst is followed by an idle period in which no media data are transmitted. The media client comprises a buffer configured to buffer received media data and an interface configured to receive a media burst. The received media burst has a media data volume that is dependent on a fill level of the buffer. Additionally, or alternatively, the idle period following the media burst has a duration that is dependent on the buffer fill level. The media client may further comprise a controller adapted to initiate a transit of the media client from a first state of power consumption to a second state of power consumption during the idle period. The first state is generally associated with a higher power consumption than the second state. The controller may be coupled to an inactivity timer that triggers the transit.

### Brief Description of the Drawings

Further aspects, advantages and optional features of the present disclosure will become apparent from the following description of exemplary embodiments when taken in conjunction with the drawings. In the drawings,
- Fig. 1: shows an embodiment of a media distribution network;
- Fig. 2: shows an embodiment of a network node;
- Fig. 3: shows an embodiment of a media client;
- Fig. 4: shows a screenshot of a media client illustrating a current playout time display and a current buffer fill level display;
- Fig. 5: shows an embodiment of a media burst configuration;
- Fig. 6: schematically illustrates fill level variations of a media client buffer;
- Fig. 7: shows an embodiment of media burst transmissions between a media client and a network node;
- Fig. 8: schematically illustrates a more detailed embodiment of a media distribution network;
- Fig.9: shows an embodiment of a power consumption state transition scheme for a media client;
- Fig. 10: shows an embodiment of a media burst transmission scheme;
- Fig. 11: is a schematic diagram illustrating a first method embodiment;
- Fig. 12: shows an embodiment of a media burst transmission scheme in accordance with the method embodiment of Fig. 11;
- Fig. 13: is a schematic diagram illustrating a second method embodiment; and
- Fig. 14: is a schematic diagram illustrating a third method embodiment.

### Detailed Description

In the following description of exemplary embodiments, for purposes of explanation and not limitation, specific details are set forth in order to provide a thorough understanding of the present disclosure. It will be apparent to one skilled in the art that the present disclosure may be practised in other embodiments that depart from these specific details. For example, while certain embodiments will be described in connection with a TCP connection for media data transmission, it will be appreciated that other transport layer transmission technologies may be used as well. Moreover, while some embodiments will describe client-side power saving measures based on exemplary RRC state transitions and RRC inactivity timers, it will readily be apparent that additional or alternative power saving measures may be initiated on the side of the media client during an idle period. It will also be evident that the present disclosure is not limited to any specific technology for gaining network access by the media client. Such network access may in principle be based on either wired or wireless technologies, or combinations thereof.

Still further, those skilled in the art will appreciate that the services, functions and steps explained herein may be implemented using software functioning in conjunction with a programmed microprocessor, an Application Specific Integrated Circuit (ASIC), a Digital Signal Processor (DSP) or a general purpose computer. It will also be appreciated that while the following embodiments will primarily be described with reference to methods and devices, the present disclosure may also be embodied in a computer program product as well as in a system comprising a computer processor and a memory coupled to the processor, wherein the memory is encoded with one or more programs that may perform the services, functions and steps disclosed herein.

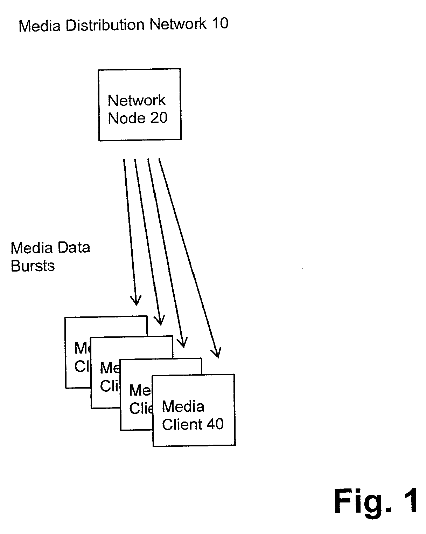

Fig. 1 illustrates an embodiment of a media distribution network 10 comprising a network node 20 and one or multiple media clients 40. The media clients 40 may be configured as stationary or portable devices. As an example, the media clients 40 may be realized as mobile telephones, smartphones, tablet computers, personal computers, laptops, and so on. The network node 20 may be realized as a server or may be integrated into a server. Alternatively, the network node 20 may be realized as a proxy or may be integrated into a proxy.

The network node 20 is configured to transmit media data, such as a media file requested for a download by an individual one of the media clients 40, in bursts to the respective media client 40. The media data thus received may be temporarily or permanently stored at the media client 40. Alternatively, or in addition, the media data may be rendered by the media client 40. The specific rendering depends on the nature of the media data. As an example, video data may be rendered on a display of the media client 40, whereas audio data may be played back via a loudspeaker or a headphone.

The media data transmission from the network node 20 to each individual media client 40 may be based on a unicast connection over a wired or wireless communication network. The unicast connection may be used for streaming the media data from the network node 20 to the media client 40 that requested the media data. The streaming is one variant based on a session concept and may be performed under control of a streaming protocol (e.g., the Real Time Streaming Protocol, RTSP, or progressive streaming via HTTP).

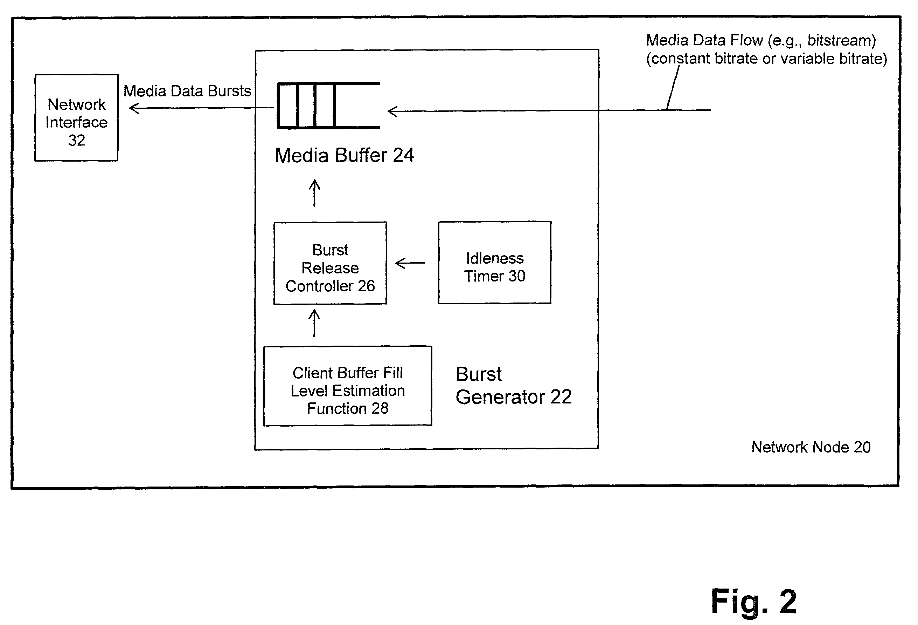

Fig. 2 illustrates individual components of the network node 20 shown in Fig. 1. It should be noted that only the components necessary for understanding the present disclosure are shown. That is, the network node 20 will typically include additional components not illustrated in Fig. 2.

As shown in Fig. 2, the network node 20 comprises a burst generator 22 and a network interface 32. The burst generator 22 is configured to receive a media data flow and transform that media data flow into media bursts. The network interface 32 is configured to transmit the media bursts towards one of the media clients 40 illustrated in Fig. 1.

There exist various possibilities how the network node 20 may obtain access to the media data flow. The media data flow may have been generated locally by the network node 20. In such a case, the network node 20 can itself be configured as a media server. In an alternative embodiment, the media data flow is received by the network node 20 from a media server coupled to the network node 20 via the network interface 32 (or a separate interface not illustrated in Fig. 2).

The media data flow received by the burst generator 22 may be a bitstream representative of a media file (e.g., a multimedia clip) requested by one of the media clients 40 in Fig. 1 for download. The media data flow may have a constant or variable bitrate. The bitstream may comprise individual units of encoded media data. The encoded media data may, for example, comprise video frames or any other encoding units such as audio samples generated by a media data encoder. The media data encoder may be compliant with any encoding format, such as the H.264 format, the Moving Pictures Expert Group 2 Transport Stream (MPEG2-TS) format, an International Standardization Organization (ISO)-based media file format (e.g., ISO-BMFF), the Audio Video Interleave (AVI) format, and so on.

Still referring to Fig. 2, the burst generator 22 comprises a media buffer 24, a burst release controller 26, a client buffer fill level estimation function 28 as well as an idleness timer 30. The burst generator 22 may, of course, comprise further components not shown in Fig. 2.

The media data flow received by the burst generator 22 is initially stored in the media buffer 24. The controller 26 is configured to release the media data buffered in the media buffer 24 in individual media bursts. Each media burst has a dedicated media data volume that is adjusted by the controller 26 taking into account one or multiple constraints. Here, the media data volume of an individual burst is adjusted by the controller 26 dependent on a fill level of a media client buffer (not shown in Fig. 2) or any other parameters. In another variant, the duration of an idle period following a specific media burst is adjusted by the controller 26 dependent on the media client buffer fill level. Of course, in certain scenarios both the media data volume for a media burst as well as the duration of an idle period following that media burst may be adjusted by the controller 26 based on the fill level.

The fill level is estimated by the estimation function 28 based on a buffering model. In the present embodiment, the buffering model applied by the estimation function 28 takes into account at least a volume of transmitted media data (i.e., a buffer filling process) and a buffer draining process at the media client 40.

The volume of transmitted media data is measured based on the media data volume of one or more bursts that have been released previously in the pending media data transmission session. The transmitted media data volume may in one implementation be measured based on the transmitted data volume (e.g., in bytes) that can more easily be measured. The transmitted data volume may exceed the transmitted media data volume by a negligible amount (e.g., by control information associated with packing the media data into data units).

Additionally, or as an alternative, the volume of transmitted media data may be derived from characteristics or attributes of the media data (e.g., from a media file including the media data). Such characteristics or attributes may include compressed media time information. This information can be dervied from so-called time-to-sample boxes of an ISO-BMFF-compliant or similar media file. The time-to-sample boxes (as, e.g., contained in the sample table box "stbl") can be used to determine the byte offset into the file for an encoding unit (e.g., a video frame or audio sample) with a given media timestamp. The difference of the byte offsets of two given encoding units can be used to calculate a data volume (and thus a volume of transmitted media data). Other media file formats include other information to calculate the byte offset of an encoding unit with a given timestamp.

Also a wall clock time associated with the media data may be taken into account here to estimate the client buffer fill level. The media client 40 is draining the media buffer 44 while that buffer 44 gets filled. As such, one may measure or estimate the duration of the buffer fill process (in terms of the wall clock time) in order to compensate for the buffer draining process while the media buffer 44 is being filled.

The client buffer draining process may be estimated by the estimation function 28. Such an estimation may also be based on any characteristics or attributes of the media data received by the burst generator 22. In case in which the media data are included in a media file, the buffer draining process may be estimated from the timing and the size of the individual encoding units (e.g., video frames and/or audio samples) as derivable from the media file.

As shown in Fig. 2, the burst generator 22 further comprises an idleness timer 30 coupled to the burst release controller 26. The idleness timer 30 is configured to define a constant or variable idle period between two successive media bursts. In one exemplary realization, the burst release controller 26 starts the idleness timer 30 at the end of a burst release process. Once the idleness timer 30 has expired, a new burst release process is started. It should be noted that an individual burst release process may extend over a certain period of time depending on the media data volume that needs to be transmitted with the released media burst.

The media bursts thus generated by the burst generator 22 are transmitted from the network interface 32 via a communication network to media client 40. Thus, there will typically be further network nodes arranged between the network node 20 and the media client 40 to which the media bursts are transmitted.

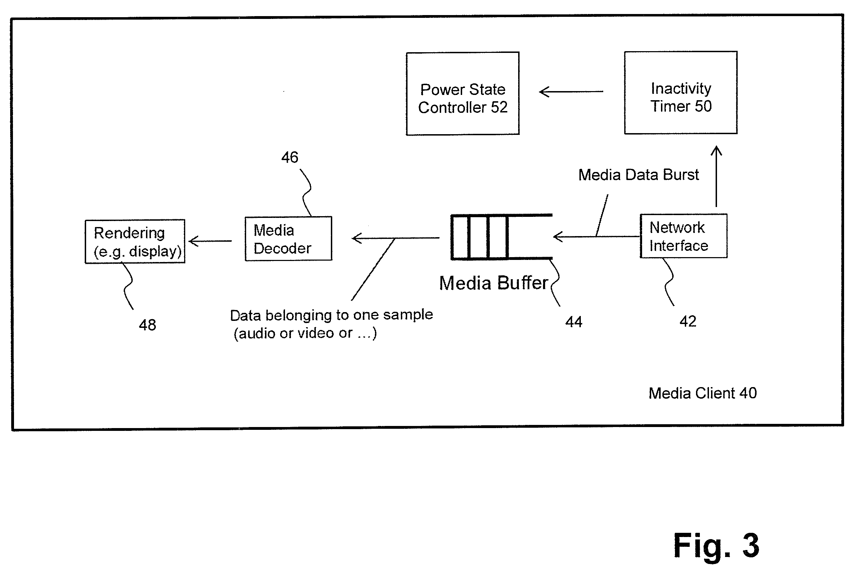

Fig. 3 exemplarily illustrates the components of a media client 40 useful for practicing the present disclosure. It will be appreciated that in other embodiments the media client 40 may comprise alternative or additional components.

As shown in Fig. 3, the media client 40 comprises a network interface 42 coupled to a communication network and configured to receive the media bursts generated by the network node 20 of Fig. 2. The media client 40 further comprises a media buffer 44 configured to temporarily store the media data received via the media bursts. In the media buffer 44, the media data may be arranged in the form of individual media samples (e.g., in the form of video frames).

Conventionally, the media buffer 44 is provided to compensate for the fact that the individual frames read from the media buffer 44 may have different sizes when predictive encoding is used (e.g., P-/B-frames have smaller sizes than I-frames). Moreover, the media buffer 44 conventionally also permits to compensate delay jitter and brief reception outages (e.g., due to mobility of the media client 40). Here, typical sizes of the media buffer 44 (e.g., for media clients 40 capable of progressive media file download) are sufficiently large to buffer 10 seconds, 20 seconds, or more of media data (in terms of playout time). Thus, it becomes possible to stop the filling process for a media buffer 44 for several seconds and only drain it.

A media decoder 46 located downstream of the buffer 44 is configured to fetch the media data from the media buffer 44 according to decoding timestamps of the buffered media samples. As an example, the media decoder 46 may fetch the media data from the media buffer 44 at intervals of 40 ms (e.g., for a 25 frames-per-second videostream).

The media decoder 46 is further configured to decode the media data fetched from the media buffer 44 and to put them into an appropriate order for rendering. The media decoder 46 may be compliant with one or multiple encoding standards such as H.264.

The decoded media data are finally rendered by a rendering function 48 depending on their nature. As an example, video or picture data may be displayed, and audio data may be played back by a loudspeaker.

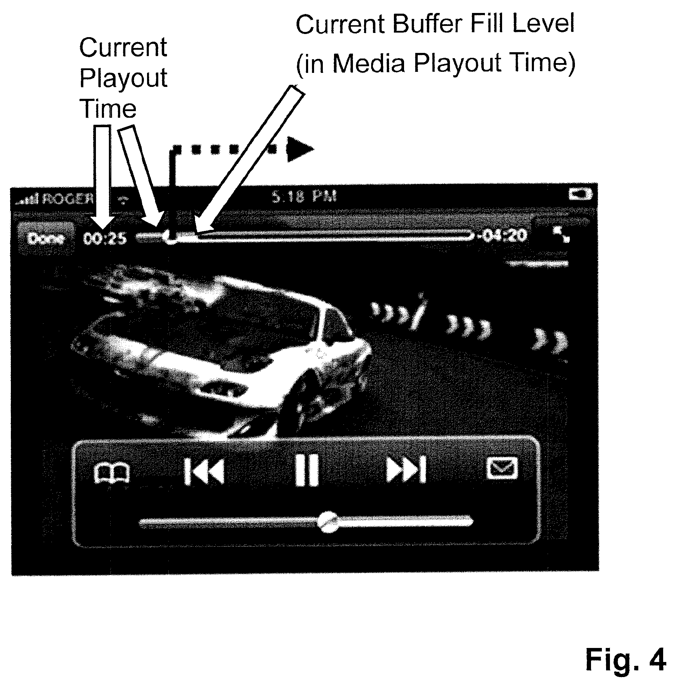

Fig. 4 illustrates a screenshot of video data rendered by the rendering function 48 and provided by a progressive download application. In addition to a video display window and a playout control bar, the screen visualizes both the current playout time (via a counter and a progressively moving icon) and the current fill level of the media buffer 44 (by a progress bar). As will be appreciated, the progress bar indicative of the actual fill level of the media buffer 44 should always be ahead of the icon indicative of the current playout time.

The embodiment of the media client 40 depicted in Fig. 3 is configured to immediately render the received media data via the rendering function 48. Such an immediate rendering can be performed in connection with a video-on-demand application or in connection with live streaming. It will be appreciated that in other embodiments the received media data may simply be stored for later use in a storage (not shown) downstream of the media buffer 44.

As has been explained above with reference to Fig. 2, the burst generator 22 of the network node 20 generates the media bursts in accordance with an estimated fill level of the client-side media buffer 44 shown in Fig. 3. Thus, it is the task of the estimation function 28 of the burst generator 22 to estimate the fill level of that media buffer 44 based on *a priori* knowledge available to the network node 20. As such, the media data volumes of the media bursts received by the media client 40 will reflect the associated fill level estimations performed by the network node 20.

As shown in Fig. 3, the media client 40 further comprises an inactivity timer 50 and a power state controller 52. In the present embodiment, the inactivity timer 50 is coupled to the network interface 42. In other embodiments, at least one of the inactivity timer 50 and the power state controller 52 may be integrated into the network interface 42.

The inactivity timer 50 is configured to be started at the end of a media burst reception process. If no further media burst is received prior to expiry of the inactivity timer 50 (i.e., if the idle period following the media burst is longer than the duration of time monitored by the inactivity timer 50), the power state controller 52 is triggered. Upon being triggered, the power state controller 52 controls one or multiple components of the media client 40, such as the network interface 42, to transit from a first state of power consumption into a second state of power consumption, wherein the first state is associated with a higher power consumption than the second state. The first state of power consumption is resumed once a new media burst arrives at the network interface 42 that needs to be buffered in the media buffer 44.

It should be noted that both the inactivity timer 50 and the power state controller 52 are optional and may be omitted in certain embodiments. When present, the adjustments of the media burst data volumes by the burst generator 22 of the network node 20 (see Fig. 2) may be performed such that idle period durations can be guaranteed that permit the inactivity timer 50 to expire without risking an underrun of the media buffer 44 during an ongoing media rendering process. Of course, in other embodiments, the media data volumes of the media bursts may be adjusted by the first generator 22 to realize different objects.

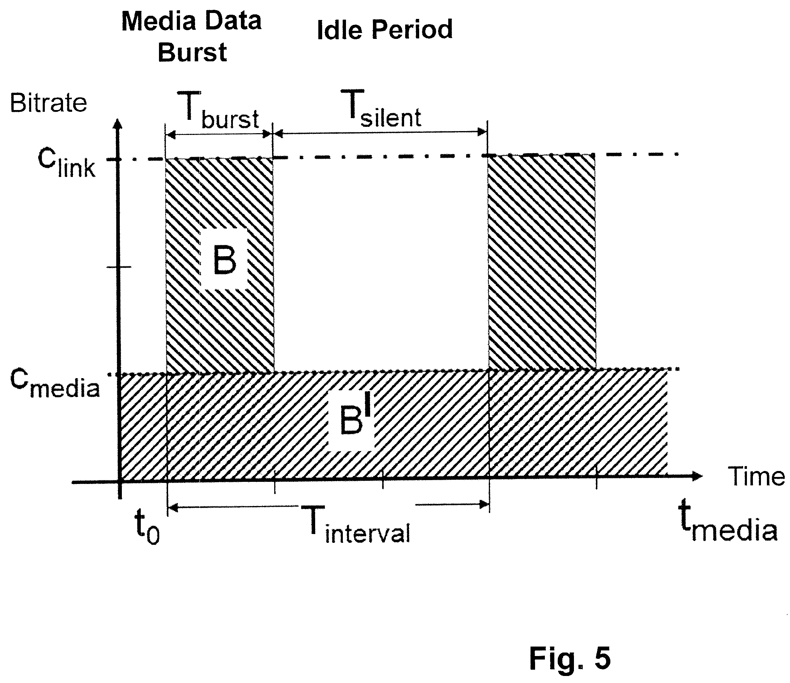

Fig. 5 is a timing diagram that schematically illustrates the draining process of the client-side media buffer 44 relative to the buffer filling process via the media bursts. As shown in Fig. 5, it is assumed that the media buffer 44 is drained by the media decoder 46 at an essentially constant rate referred to as media bitrate c_{media}. It should be noted that c_{media} typically varies over time (e.g., in a video-on-demand scenario). In many cases, c_{media} is determined during media data encoding by a content provider that offers the media data for download.

The filling process for the media buffer 44 is achieved via the media bursts transmitted to the media client 40 via a network connection having an available link bitrate cₗᵢₙₖ. As will be appreciated, cₗᵢₙₖ will typically vary over time. In case of a wireless network connection, variations in cₗᵢₙₖ will, for example, depend on the prevailing radio conditions and the radio traffic generated by other users.

In the scenario illustrated in Fig. 5, it is assumed that the available link bitrate _{clink} is fully used for transmission of an individual media burst having a duration T_{burst}. Therefore, the media burst illustrated in Fig. 5 will have a media data volume B = _{clink} x T_{burst}. In the present scenario, T_{burst} indicates the period of time required by the media client 40 to fetch the specific media burst. Generally, if a target media data volume is to be transmitted via a specific media burst, the duration of the burst T_{burst} depends on the available link bitrate cₗᵢₙₖ. The higher the link bitrate _{clink} available for the media client 40, the shorter will be the burst fetching duration T_{burst}.

As illustrated in Fig. 5, each media burst is followed by an idle period in which no media data are transmitted. The idle period has a duration Tₛᵢₗₑₙₜ. The aggregated durations of the media burst T_{burst} and of the idle period Tₛᵢₗₑₙₜ that follows the media burst define a time window having a window duration Tᵢₙₜₑᵣᵥₐₗ. The window duration Tᵢₙₜₑᵣᵥₐₗ may be controlled by the network node 20 to be constant or to be variable, depending on the current needs.

During the window duration Tᵢₙₜₑᵣᵥₐₗ, the media buffer 44 of the media client 40 is filled with B byte. At the same time, the buffer is drained at a rate of B' = c_{media} x Tᵢₙₜₑᵣᵥₐₗ. It will be appreciated that the media data volume B of the burst should be adjusted such that is does not fall below B' (i.e., B > = B'). In case B = B', the (minimum) burst duration T_{burst} can be calculated as T_{burst} = (c_{media} x Tᵢₙₜₑᵣᵥₐₗ)/cₗᵢₙₖ. The resulting (maximum) duration of the associated idle period can be expressed as Tₛᵢₗₑₙₜ = (1 - c_{media}/cₗᵢₙₖ) X Tᵢₙₜₑᵣᵥₐₗ.

In one implementation, the burst duration T_{burst} may be adjusted to the current link bitrate cₗᵢₙₖ, so that the idle period duration Tₛᵢₗₑₙₜ does not fall below a certain threshold. In other words, the media data volume B of a media burst may be adjusted such that a certain idle period duration can be ensured without risking an underrun of the media buffer 44 of the media client 40. To this end, the burst generator 22 may adjust the media data volume B of a specific media burst dependent on the estimated fill level of the media buffer 44 (at the end of the idle period) so that the duration of the idle period Tₛᵢₗₑₙₜ does not have to become overly short.

As will be appreciated, short idle period durations Tₛᵢₗₑₙₜ can be inefficient in consideration of the processing overhead associated with media burst generation. Moreover, longer idle period durations Tₛᵢₗₑₙₜ increase the possibility that the inactivity timer 50 of the media client 40 can expire, so that the media client 40 can transit to a state of reduced power consumption. On the other hand, overly long idle period durations Tₛᵢₗₑₙₜ are associated with an unnecessary waste of transmission bandwidth in case the user decides to abandon, or abort, for example an ongoing download session. All those considerations may be taken into account and combined as needed to select a suitable idle period duration Tₛᵢₗₑₙₜ for a specific usage scenario.

An upper bound for Tᵢₙₜₑᵣᵥₐₗ is determined by a depth (i.e., size) of the client-side media buffer 44. Typical sizes will correspond to a buffered playout time of a few seconds (e.g., up to 5, 10 or 20 s or even substantially more). As said, a lower bound for Tᵢₙₜₑᵣᵥₐₗ will in certain embodiments be determined by the settings of the inactivity timer 52. It should be noted here that changing a power consumption state will always require some processing overhead (e.g., signalling load). Thus, the lower bound for Iᵢₙₜₑᵣᵥₐₗ may be selected such that the state of lower power consumption can be maintained for a sufficiently long time to justify the transit from the state of higher power consumption to the state of lower power consumption.

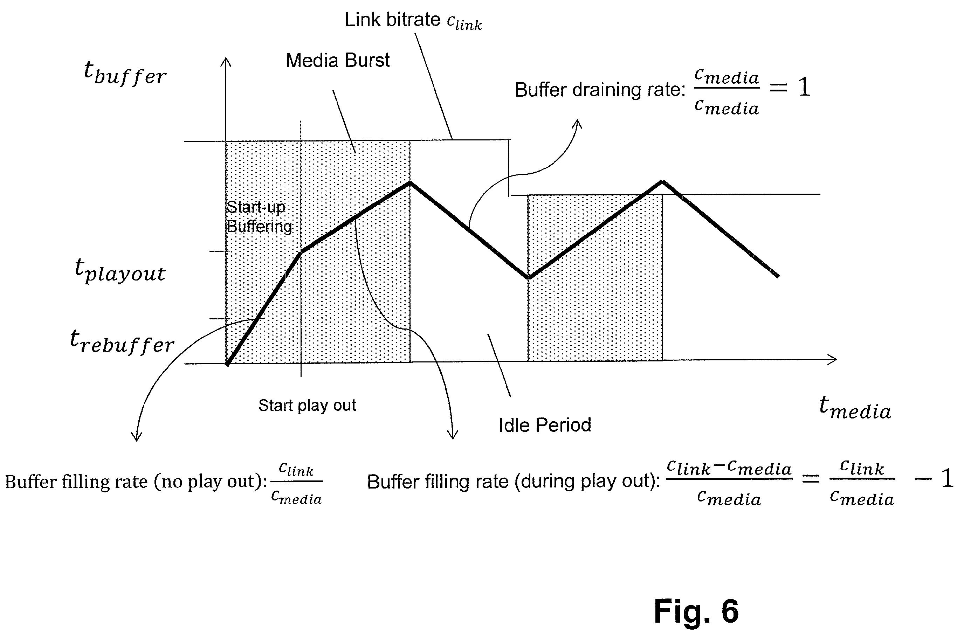

Fig. 6 illustrates a modelling of the fill level of the media buffer 44 as a function of time. Here, the fill level of the media buffer 44 is indicated in units of buffered media time (t_{buffer}). The buffering process is illustrated for a scenario in which the media client 40 fetches a media file and starts rendering the media data via the rendering function 48 while still receiving that file via the individual media bursts ("progressive download"). The diagram of Fig. 6 constitutes a buffering model that may be used by the estimation function 28 of the burst generator 22 to adjust the media data volumes B of the individual media bursts.

As shown in Fig. 6, the download session starts with a short period of time during which media data are received in a media burst, but the rendering (playout) process has not yet started ("buffering only"). After a certain buffer fill level playout has been reached, the media decoder 46 starts draining the media buffer 44 according to the media bitrate c_{media}, and playout by the rendering function 48 can start. Typically, a further predefined buffer fill level t_{rebuffering} indicates a minimum fill level at which the media client 40 enters a re-buffering state. During the re-buffering state, playout by the rendering function 48 will be freezed.

Fig. 6 indicates that the fill level of the client-side media buffer 44 can be modelled taking into account the ratio between the available link bitrate cₗᵢₙₖ and the media bitrate c_{media}. As becomes apparent, also variations in the link bitrate cₗᵢₙₖ should be taken into account.

The individual buffer filling rates, or gradients, shown in Fig. 6 are indicative of how quickly the media buffer 44 of the media client 40 is filling taking into account both buffer filling and buffer draining processes. It is generally preferred that the buffer filling rate is large (which means that the link bitrate cₗᵢₙₖ should be substantially larger than the media bitrate c_{media}). Nonetheless, c_{media} and cₗᵢₙₖ are typically varying as also shown in Fig. 6. As such, the buffer filling rate is also varying, and such variations need to be taken into account by the estimation function 28.

The burst-based filling process of the media buffer 44 shown in Fig. 6 permits to control the buffer filling rate via multiple of the parameters discussed above (e.g., via the media data volume B of an individual media burst and/or the idle period duration Tₛᵢₗₑₙₜ). The buffer filling rate may be controlled such that the losses of buffered media data are minimized when a user of the media client 40 decides to stop rendering the media data. It has, for example, been found that users are often only watching the first seconds of a multimedia clip and then proceed to the next multimedia clip without completely watching the first ("clip abandonment"). To limit the losses created by clip abandonment, and the resulting waste of transmission bandwidth, the buffer filling rate may in one embodiment be controlled ("paced") such that the buffer level of the media buffer 44 is just filled to the point to keep the rendering function 48 operable during the idle period (i.e., to avoid a buffer underrun). Such pacing can thus also be implemented in connection with transmission of the media data in individual media bursts as presented herein.

As will be appreciated, an adjustment of the idle period duration (e.g., depending on one or both of the client buffer fill level and power state transitions as explained below in more detail) will influence the pacing "gain". A shorter idle period duration leads to a fine-grained pacing. This means that an abandonment by a user will lead to a comparatively lower waste of transmission bandwidth. Conversely, longer idle period durations require that in the preceding media bursts a larger media data volume has to be transmitted, which leads to a more coarse-grained pacing (i.e., higher losses and less efficient transmission bandwidth usage).

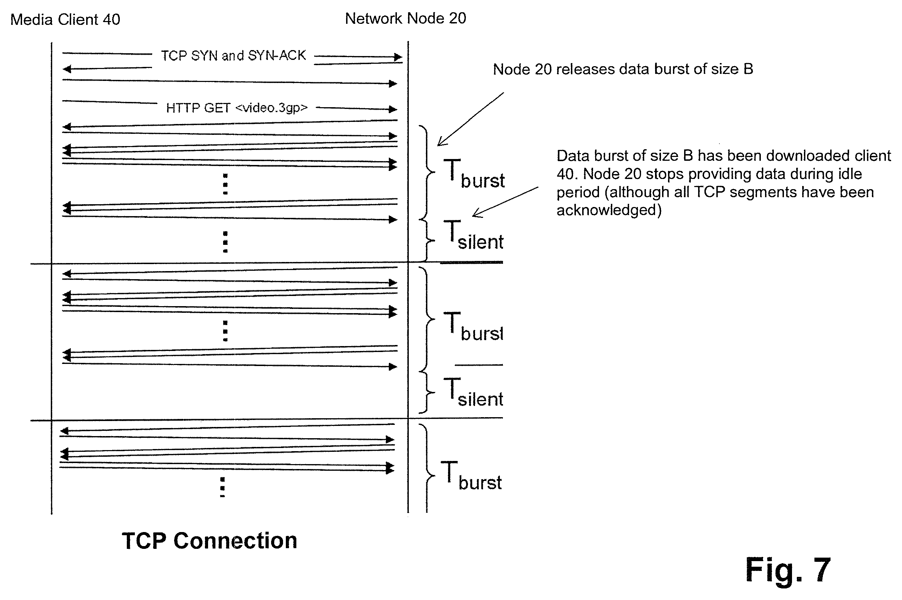

Fig. 7 schematically illustrates the signalling between the network node 20 and the media client 40 in connection with an exemplary media file download, such as an HTTP progressive download session. In certain implementations, the same TCP connection may be used during the entire download session. In other implementations, two or more TCP connections may be used (e.g., one TCP connection per burst). In case the media client 40 employs TCP flow control, it may adjust a TCP window size depending on its needs. Therefore, the TCP window size may shrink during an idle period duration Tₛᵢₗₑₙₜ, which means that the available link bitrate Cₗᵢₙₖ cannot be immediately used by the TCP connection.

The TCP flow sequence illustrated in Fig. 7 starts with TCP SYN signalling initiated by the media client 40 to the network and an associated acknowledgment (SYN-ACK) by the network node 20 or a media server (not shown). Then, the media client 40 initiates a download session via a HTTP GET command that is again acknowledged by the network. In the example of Fig. 7, the media client 40 requests the media file "video.3gp" for download.

Next, a first media burst including a portion of the requested media file is transmitted from the network node 20 to the media client 40. As illustrated in Fig. 7, the media burst comprises multiple individual media data transports to the media client 40. With each media transport, an individual TCP segment is sent from the network node 20 to the media client 40. Successful receipt of a TCP segment by the media client 40 is acknowledged ("ACK") back to the network node 20. This acknowledgement triggers transmission of the next TCP segment within the same media burst. Dependent on the configuration of the network node 20, a TCP segment may be re-transmitted in case no acknowledgement is received within a predefined period of time (or in case a negative acknowledgement "NACK" is received).

The burst generator 22 of the network node 20 keeps track of the data transmitted during an ongoing media burst (e.g., in terms of bytes). As soon as the transmitted volume of data equals or exceeds a (target) media data volume B, the network node 20 terminates the media burst (i.e., terminates the further transmission of TCP segments for the ongoing burst).

As indicated in Fig. 7, all TCP segments of a media burst need to be acknowledged. This means that the network node 20, after the media burst has been terminated, waits for an acknowledgement of receipt of the last TCP segment and then starts the idleness timer 30. The idleness timer 30 defines the duration of the idle period Tₛᵢₗₑₙₜ. During the idle period, no TCP segments will be transmitted (or provided for download) by the network node 20. Only upon expiry of the idleness timer 30, the next media burst is transmitted as illustrated in Fig. 5.

As stated above, a TCP window size may shrink during the idle period between two media bursts. As such, the TCP connection between the network node 20 and the media client 40 may be in a slow start phase when a new media burst is transmitted after an idle period. This situation may be taken into account by the burst generator 22 (e.g., by the estimation function 28).

It should further be noted that instead of the idleness timer 30, or in addition to that timer 30, other mechanisms for determining the duration of the idle period Tₛᵢₗₑₙₜ may be employed as needed. Specifically, in other embodiments the idle period duration Tₛᵢₗₑₙₜ may vary within a download session.

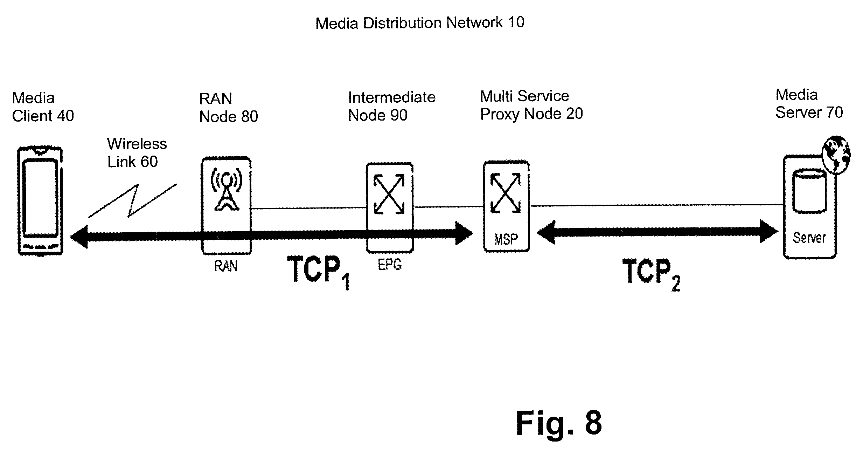

Fig. 8 illustrates a possible implementation of the network node 20 and the media client 40 in a media distribution network 10. The media client 40 is wirelessly attached via a communication network that comprises a wireless link 60 to a media server 70 located in a service network. The media client 40 may thus be realized as a mobile device. As illustrated in Fig. 8, the wireless link 60 stretches between the media client 40 and a Radio Access Network (RAN) node 80 (e.g., a base station).

In the embodiment illustrated in Fig. 8, the network node 20 in charge of burst generation is located as a Multi-Service Proxy (MSP) node 20 (simply called proxy node 20 hereinafter) in the core network between the RAN node 80 and the media server 70. An optional Evolved Packet Gateway (EPG) is located as intermediate node 90 between the proxy node 20 and the RAN node 80. The intermediate node 90 may comprise the functionality of a Packet Data Network Gateway (P-GW) and serve as a mobility anchor as generally known in the art. It should be noted that in other deployments the proxy node 20 could also be placed between the RAN node 80 and the intermediate node 90.

A first TCP connection TCP₁ stretches between the media client 40 and the proxy node 20, and a second TCP connection TCP₂ stretches between the proxy node 20 and the media server 70. It should be noted that the presence of the proxy node 20 is not detectable by the media client 40. That is, the proxy node 20 is arranged transparently between the media client 40 and the media server 70 so that the media client 40 may assume that it has a direct TCP connection to the media server 70. In other embodiments, the proxy node 20 may be realized in a non-transparent manner, which means that it may be detectable by the media client 40.

The two TCP connections TCP₁, TCP₂ illustrated in Fig. 8 may be utilized for a progressive download session as discussed above. The TCP connection illustrated in Fig. 7 will be the TCP connection TCP₁ between the media client 40 and the proxy node 20 in Fig. 8. Via the TCP connection TCP₂ to the media server 70, the proxy node 20 may receive the media data flow for processing by the burst generator 22 (see Fig. 2).

In the scenario illustrated in Fig. 8 the media client 40 comprises the inactivity timer 50 and the power state controller 52 illustrated in Fig. 3. The inactivity timer 50 and the power state controller 52 belong to an RRC functionality of the media client 40. The RRC functionality is part of a Universal Mobile Telecommunication System (UMTS) Wideband Code Division Multiple Access (WCDMA) protocol stack of the network interface 42 installed in the media client 40. That protocol stack handles control plane signalling on Layer 3 between the network interface 42 of the media client 40 and a corresponding network interface of the RAN node 80. As will be appreciated, similar RRC functionalities exist in other wireless communication systems, such as the Long Term Evolution (LTE) communication system.

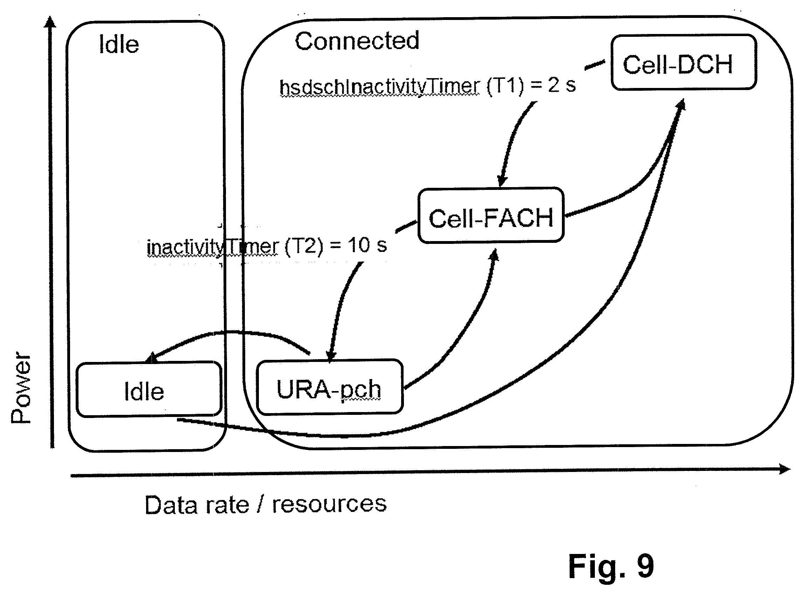

Fig. 9 illustrates the various RRC states that may be implemented in the network interface 42 of the media client 40 in an exemplary UMTS Terrestrial RAN (UTRAN) scenario. As illustrated in Fig. 9, the individual RRC states require different data rates and processing resources, and as such are associated with different power consumption levels. The transition between the individual states is controlled by two dedicated RRC inactivity timers (only one such timer 50 has been illustrated in Fig. 3).

The configuration of the RRC inactivity timers has considerable impact on the battery life of the (mobile) media client 40. Specifically, the RRC idle mode (no connection) has the lowest energy consumption. The states in the RRC connective mode, in order of decreasing power consumption, are CELL_DCH (Dedicated Channel), CELL_FACH (Forward Access Channel), CELL_PCH (Cell Paging Channel) and URA_PCH (URA Paging Channel). The power consumption in the CELL_FACH state is roughly 50% of that in the CELL_DCH state, and the PCH states use about 1 to 2% of the power consumption of the CELL_DCH state.

The transitions to states of lower power consumption are triggered by expiry of the inactivity timers as illustrated in Fig. 9. The specific settings of the inactivity timers may be defined by network operators and can be variable.

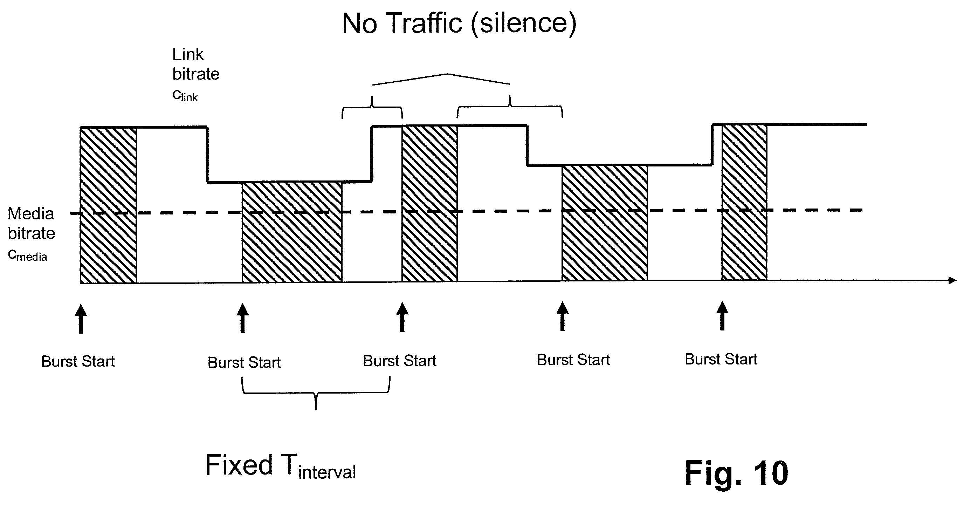

According to one implementation of the technique presented herein, it is suggested that the media client 40 is permitted to enter an RRC state of lower power consumption during the idle period following a specific media burst. It has now been found that entering an RRC state of lower power consumption may sometimes be difficult to achieve when releasing the media bursts at a fixed periodicity (i.e., at a fixed window period duration Tᵢₙₜₑᵣᵥₐₗ) as illustrated in Fig. 10.

As will be appreciated, a fixed duration of Tᵢₙₜₑᵣᵥₐₗ leads to variable download durations for media bursts in case the link bitrate cₗᵢₙₖ varies. The result is that the idle period duration Tₛᵢₗₑₙₜ also varies as illustrated in Fig. 10. Depending on the link bitrate variations, the idle period duration Tₛᵢₗₑₙₜ may often become too short to justify a transition to an RRC state of lower power consumption. It would thus be advantageous to adjust the media data volume B of an individual media burst dependent on the fill level of the media client 40 such that the idle period following the media burst will not fall below a duration defined by one or more of the RRC inactivity timers. In this regard, various approaches may be initiated as will now be discussed in more detail.

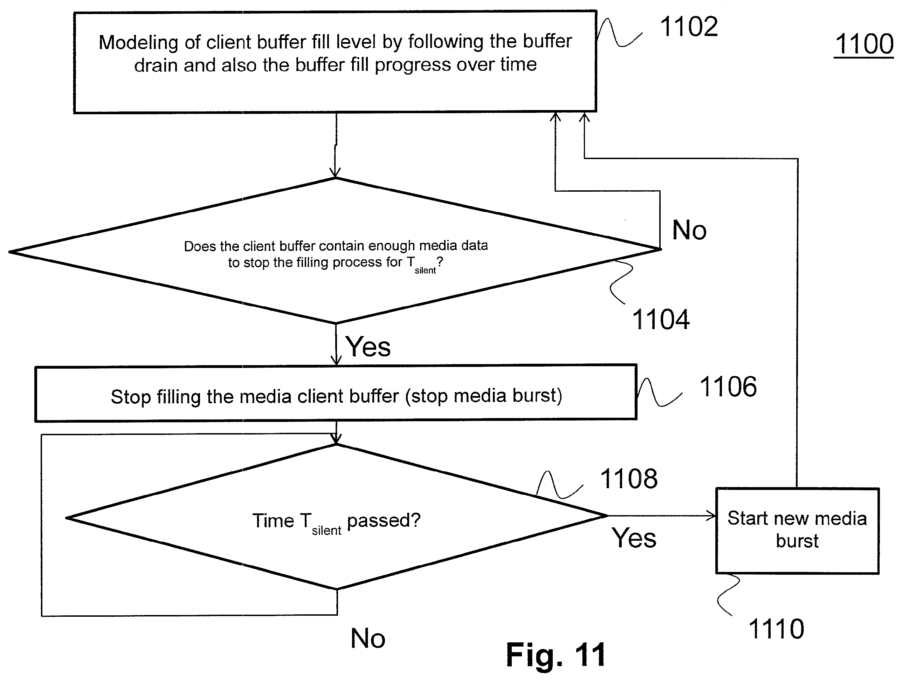

Fig. 11 illustrates a flow diagram 1100 representative of a method embodiment that ensures that the idle periods will have constant durations Tₛᵢₗₑₙₜ of, for example, 20s. It will be appreciated that the duration of Tₛᵢₗₑₙₜ may vary as needed. As a consequence of the fixed idle period duration Tₛᵢₗₑₙₜ, the aggregated durations of the media burst T_{burst} and of the idle period Tₛᵢₗₑₙₜ (i.e., the window duration Tᵢₙₜₑᵣᵥₐₗ) will generally vary over time. Those variations will, for example, be the result of a changing link bitrate cₗᵢₙₖ.

The method embodiment illustrated in Fig. 11 may generally be practised by the network node 20 illustrated in Fig. 2 and, optionally, in connection with the transmission scenarios illustrated in Figs. 5 and 7. The method embodiment of Fig. 11 is particularly beneficial from the point of view of the media client 40 illustrated in Fig. 8 in connection with implementing the power saving measures shown in Fig. 9. Accordingly, the method embodiment could also be practised by the proxy node 20 of Fig. 8.

As shown in Fig. 11, the network node 20 continuously maintains a model of the fill level of the client-side media buffer 44 (step 1102). The fill level is modelled by following the buffer draining process (e.g., in terms of media samples fetched by the media decoder 46) and also the buffer filling process (e.g., in terms of transmitted TCP samples or in terms of transmitted data in byte or in terms of transmitted "playout time").

It is assumed that in step 1102 the burst release controller 26 of the burst generator 22 illustrated in Fig. 2 has already started releasing a media burst, which means that the media buffer 44 of the media client 40 is gradually filling. Step 1102 will generally be performed by the estimation function 28. This means that the burst release controller 26 may continuously inform the estimation function 28 about the media data volume already transmitted in the ongoing burst.

In step 1104 it is checked if the media buffer 44 of the media client 40 presently (i.e., during the ongoing burst) contains enough media data to stop the buffer filling process for a predefined idle period duration Tₛᵢₗₑₙₜ. This check may be performed based on the current fill level of the media buffer 44 (as determined in step 1102), the estimated buffer draining rate by the media decoder 46 and the scheduled idle period duration Tₛᵢₗₑₙₜ·

If it is determined in step 1104 that the media buffer 44 of the media client 40 does not yet contain enough media data, step 1104 loops back to step 1102. Otherwise, the estimation function 28 informs the burst release controller 26 of the burst generator 22 in step 1106 that the ongoing burst (e.g., the ongoing TCP segment transmissions) can be terminated.

From step 1106 the method proceeds to step 1108. In step 1108 the idleness timer 30, which has been set to a fixed idle period duration Tₛᵢₗₑₙₜ, is started. Once the idleness timer has expired, the method proceeds to step 1110. In step 1110, the burst release controller 26 starts releasing a new burst, and the method loops back to step 1102.

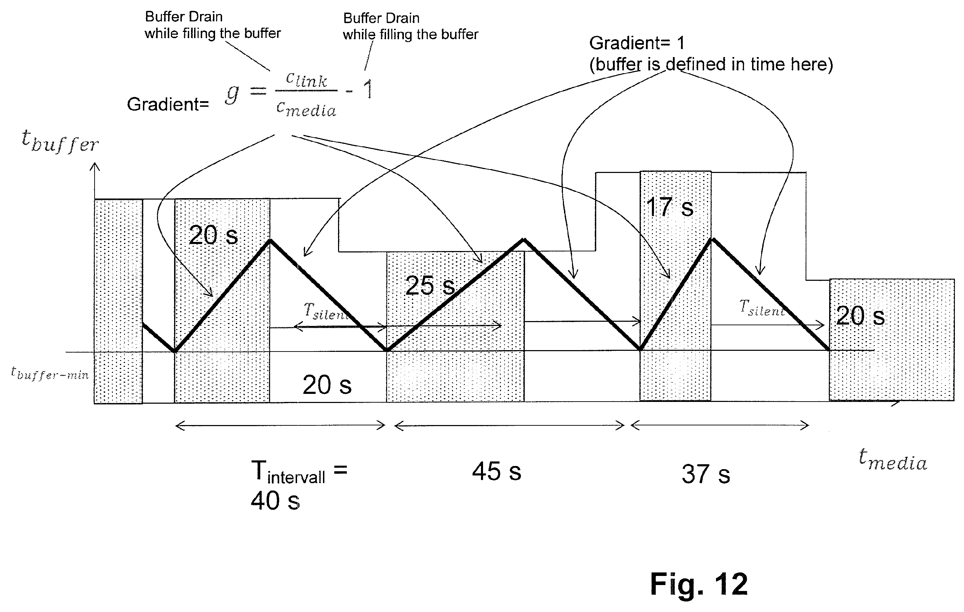

Fig. 12 is a timing scenario similar to Fig. 6 that shows the model of the media buffer 44 of the media client 40 as maintained by the estimation function 28 during the process illustrated in Fig. 11. As becomes apparent from Fig. 12, a fixed idle period duration Tₛᵢₗₑₙₜ of (in the present embodiment) 20 s can be guaranteed. On the other hand, the burst duration T_{burst} will vary depending on the available link bitrate cₗᵢₙₖ. As becomes apparent, a higher link bitrate cₗᵢₙₖ leads to a shorter burst duration, and vice versa. Consequently, the window duration Tᵢₙₜₑᵣᵥₐₗ will typically vary from one window to the next window as also shown in Fig. 12.

As becomes apparent from Fig. 12, the buffer filling rate generally depends on the ratio between the link bitrate cₗᵢₙₖ and the media bitrate c_{media}. It can further be seen that the media decoder 46 is continuously draining the media buffer 44. In Fig. 12, T_{buffer-min} is the minimum buffer level (a safety margin) at which the media buffer 44 approaches a buffer underrun and the rendering function 48 will stop playback. This means that the media buffer 44 should be filled at least to a level that exceeds T_{buffer}-ₘᵢₙ by an amount of media data that permits the rendering function 48 to operate during the idle period duration Tₛᵢₗₑₙₜ without reaching T_{buffer-min}.

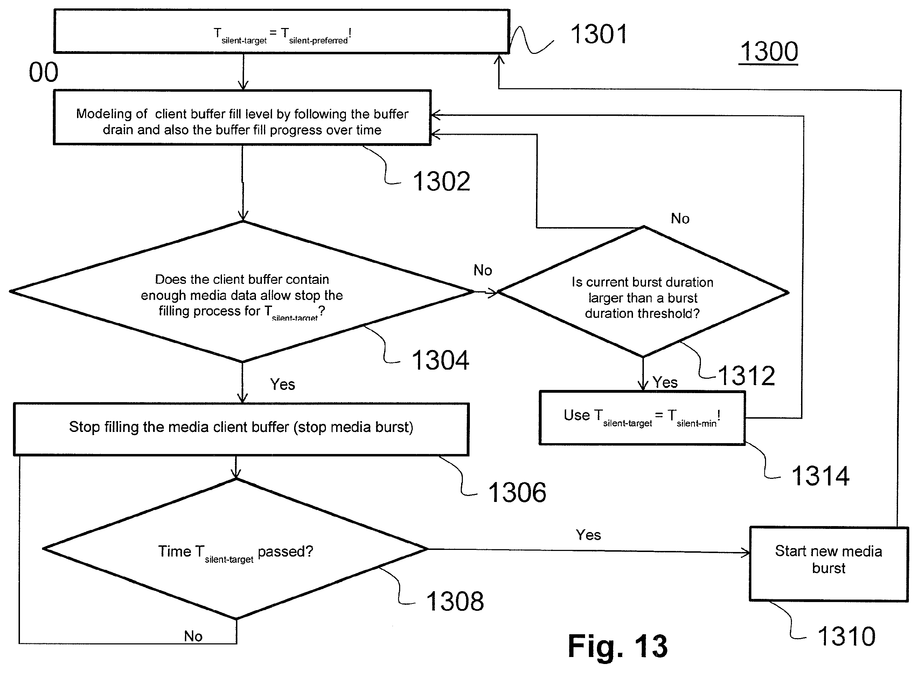

Fig. 13 illustrates a flow diagram 1300 representative of another method embodiment. The method embodiment of Fig. 13 is based on the method embodiment of Fig. 11 and prevents that a burst duration T_{burst} becomes excessively long. As soon as the duration of the burst exceeds a predefined threshold (which means that it would take overly long to transmit the burst), a target duration T_{silent-target} of the idle period is reduced to a minimum duration Tₛᵢₗₑₙₜ₋ₘᵢₙ·

With reference to Fig. 13, steps 1302 to 1310 essentially correspond to steps 1102 to 1110 described with reference to Fig. 11. For this reason, only the major differences will be described here.

In an initial step 1301, a target idle period duration T_{silent-target} is set to a preferred value T_{silent-preferred}. As long as the media client buffer is not yet sufficiently filled to guarantee an idle period of T_{silent-target}, it is additionally checked in step 1112 if the current burst duration is longer than a predefined burst duration threshold. In step 1312, the burst duration may be monitored in terms of one or more parameters (e.g., duration in time, transmitted data in byte number of TCP segments transported, and so on). If it is determined in step 1312 that the burst duration threshold is exceeded, the target idle period duration T_{silent-target} is set to a lower value Tₛᵢₗₑₙₜ₋ₘᵢₙ in step 1314. From step 1314 the method proceeds to step 1302.

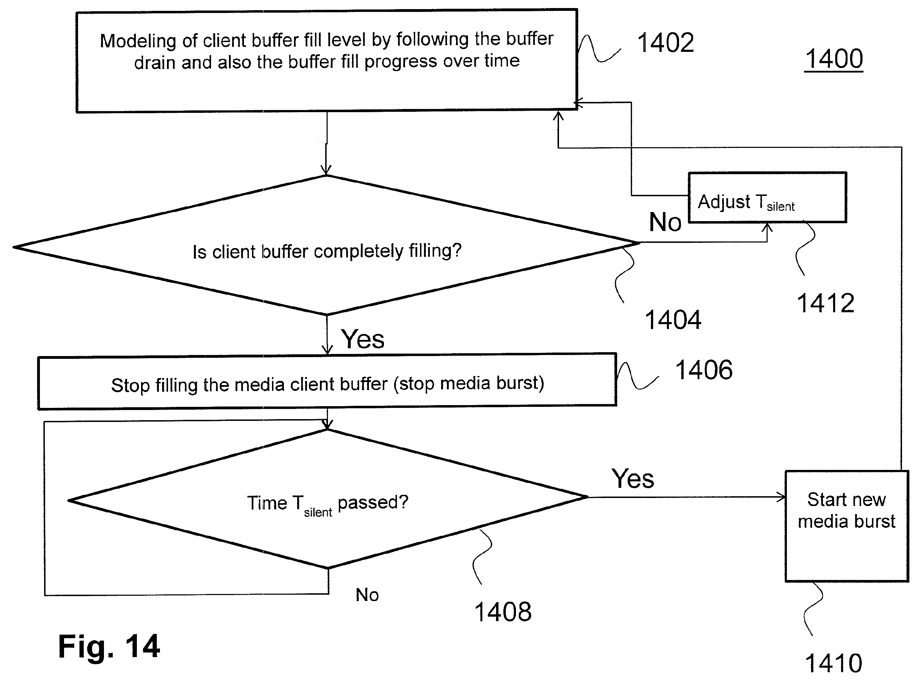

Fig. 14 illustrates a still further flow diagram 1400 representative of another method embodiment. Steps 1402, 1406, 1408 and 1410 essentially correspond to steps 1102, 1106, 1108 and 1110 of Fig. 11. Only the major differences will be described here.

According to the method embodiment illustrated in Fig. 14, media bursts are sent until the network node 20 determines in step 1404 that the media buffer 44 of the media client 40 has completely been filled. In such a case the media client 40 has set the TCP window size to zero to stop the transmission of any further media data. This approach is also referred to as TCP flow control.

Upon starting a media burst in the scenario of Fig. 14, a timer is started to measure the time until the network node 20 determines that the TCP window size has been set to zero. When the network node 20 detects that the TCP window size has been set to zero by the media client 40, it proceeds from step 1104 to step 1406. Otherwise, that means as long as the TCP window size is above zero, the buffer filling time is continued to be measured in step 1412 and the method proceeds to step 1402.

When the network node 20 stops filling the media client buffer 44 in step 1406, also the timer is stopped. Based on the value of the timer and, optionally, further information pertaining to the buffer filling process (e.g., the link bitrate cₗᵢₙₖ) and the buffer draining process (e.g., the media bitrate c_{media}), the buffer fill level may be estimated by the estimation function 28. Based on this estimation, a suitable idle period duration Tₛᵢₗₑₙₜ can be selected for the subsequent step 1408. This selection may be performed such that a buffer underrun at the media client 40 is prevented.

Thus, the idle period may be adjusted based on the fill level of the media client buffer 44 upon execution of step 1406. In one implementation, the currently feasible idle period duration Tₛᵢₗₑₙₜ is directly calculated and continuously adjusted in step 1412 for later use in step 1408.

It is believed that many advantages of the present disclosure will be fully understood from the foregoing description, and it will be apparent that various changes may be made in the form, construction and arrangement of the exemplary aspects thereof without departing from the scope of the invention, or without sacrificing all of its advantages. Because the invention can be varied in many ways, it will be recognized that the invention should be limited by the scope of the claims that follow.

## Claims

1. A method of operating a network node (20) in a media distribution network (10) in which media data are transmitted in media bursts to a buffer (44) of a media client (40), wherein a media burst is followed by an idle period in which no media data are transmitted, the method comprising, for each of at least two successive media bursts:
determining a fill level of the media client buffer (44); and
generating a media burst, including adjusting a media data volume of the media burst dependent on the fill level,
wherein the media data volume is adjusted so that the idle period following the media burst will not fall below a first duration.

2. The method of claim 1, wherein
determining the fill level comprises estimating the fill level based on a buffering model.

3. The method of claim 2, wherein
the buffering model takes into account a volume of transmitted media data and a buffer draining rate at the media client.

4. The method of any of the preceding claims, wherein
the media burst comprises multiple individual media data transports to the media client (40).

5. The method of claim 4, wherein
the fill level is determined during the media burst, and wherein the media data volume of the media burst is adjusted by terminating the media data transports dependent on the fill level.

6. The method of claim 4 or 5, further comprising
receiving an acknowledgement of receipt of a media data transport, wherein the acknowledgement triggers the next media data transport.

7. The method of any of the preceding claims, wherein
at the end of the media burst an idleness timer (30) is started to define the idle period, wherein after expiry of the idleness timer (30) the next media burst is generated.

8. The method of any of the preceding claims, wherein
a first bit rate at which the media burst is transmitted is on the average higher than a second bit rate at which the media client buffer (44) is drained.

9. A method of operating a media client (40) in a media distribution network (10) in which media data are transmitted in media bursts to a buffer (44) of the media client (40), wherein a media burst is followed by an idle period in which no media data are transmitted, the method comprising, for each of at least two successive media bursts:
receiving a media burst, wherein a media data volume of the media burst is dependent on a fill level of the media client buffer (44), and wherein the media data volume is adjusted so that the idle period following the media burst will not fall below a first duration.

10. A computer program product comprising program code portions for performing the method of any of the preceding claims when the computer program product is executed by a computing device.

11. The computer program product of claim 10, stored on a computer-readable recording medium.

12. A network node (20) for a media distribution network (10) in which media data are transmitted in media bursts to a buffer (44) of a media client (40), wherein a media burst is followed by an idle period in which no media data are transmitted, the network node (20) comprising:
a component configured to determine a fill level of the media client buffer (44); and
a generator (22) configured to generate media bursts, including to adjust, for each of at least two successive media bursts, a media data volume of the media burst dependent on the fill level, wherein the media data volume is adjusted so that the idle period following the media burst will not fall below a first duration.

13. A media client (40) for a media distribution network (10) in which media data are transmitted in media bursts from a media server to the media client (40), wherein a media burst is followed by an idle period in which no media data are transmitted, the media client comprising:
a buffer (44) configured to buffer received media data; and
an interface (42) configured to receive media bursts, wherein, for each of at least two successive media bursts, a media data volume of the media burst is dependent on a fill level of the buffer (44), and wherein the media data volume is adjusted so that the idle period following the media burst will not fall below a first duration.

14. The media client of claim 13, further comprising
a controller (52) adapted to initiate a transit of the media client from a first state of power consumption into a second state of power consumption during the idle period, wherein the first state is associated with a higher power consumption than the second state.

15. The media data client of claim 14 , further comprising
an inactivity timer (50) coupled to the controller (50), wherein the inactivity timer (50) is adapted to trigger the transit.

## Patentansprüche

1. Verfahren zum Betreiben eines Netzwerkknotens (20) in einem Medienverbreitungsnetzwerk (10), in welchem Mediendaten in Medienbursts an einen Zwischenspeicher (44) eines Medienclients (40) gesendet werden, wobei ein Medienburst von einer Ruhezeit gefolgt ist, in welcher keine Mediendaten gesendet werden, wobei das Verfahren für jeden von zumindest zwei aufeinanderfolgenden Medienbursts folgendes umfasst:
Ermitteln eines Füllstands des Medienclientzwischenspeichers (44); und
Erzeugen eines Medienbursts, enthaltend ein Anpassen eines Mediendatenvolumens des Medienbursts abhängig vom Füllstand,
wobei das Mediendatenvolumen so angepasst ist, dass die Ruhezeit, die dem Medienburst folgt, eine erste Dauer nicht unterschreitet.

2. Verfahren nach Anspruch 1, wobei
das Ermitteln des Füllstands ein Einschätzen des Füllstands basierend auf einem Zwischenspeichermodell umfasst.

3. Verfahren nach Anspruch 2, wobei
das Zwischenspeichermodell ein Volumen von gesendeten Mediendaten und eine Zwischenspeicherentleerungsrate beim Medienclient berücksichtigt.

4. Verfahren nach einem der vorangehenden Ansprüche, wobei
der Medienburst mehrfache einzelne Mediendatentransporte zum Medienclient (40) umfasst.

5. Verfahren nach Anspruch 4, wobei
der Füllstand während des Medienbursts ermittelt wird und wobei das Mediendatenvolumen des Medienbursts durch Beendigen der Mediendatentransporte abhängig vom Füllstand angepasst wird.

6. Verfahren nach Anspruch 4 oder 5, des Weiteren umfassend
Empfangen einer Empfangsbestätigung eines Mediendatentransports, wobei die Bestätigung den nächsten Mediendatentransport auslöst.

7. Verfahren nach einem der vorangehenden Ansprüche, wobei
am Ende des Medienbursts ein Ruhezeitgeber (30) gestartet wird, um die Ruhezeit zu definieren, wobei nach Ablauf des Ruhezeitgebers (30) der nächste Medienburst erzeugt wird.

8. Verfahren nach einem der vorangehenden Ansprüche, wobei
eine erste Bitrate, bei der der Medienburst gesendet wird, im Durchschnitt höher ist als eine zweite Bitrate, bei welcher der Medienclientzwischenspeicher (44) entleert wird.

9. Verfahren zum Betreiben eines Medienclients (40) in einem Medienverbreitungsnetzwerk (10), in dem Mediendaten in Medienbursts an einen Zwischenspeicher (44) des Medienclients (40) gesendet werden, wobei ein Medienburst von einer Ruhezeit gefolgt ist, in welcher keine Mediendaten gesendet werden, wobei das Verfahren für jeden von zumindest zwei aufeinanderfolgenden Medienbursts folgendes umfasst:
Empfangen eines Medienbursts, wobei ein Mediendatenvolumen des Medienbursts von einem Füllstand des Medienclientzwischenspeichers (44) abhängig ist, und wobei das Mediendatenvolumen so angepasst ist, dass die Ruhezeit, die dem Medienburst folgt, eine erste Dauer nicht unterschreitet.

10. Rechnerprogrammprodukt, umfassend Programmcodeabschnitte zum Durchführen des Verfahrens nach einem der vorangehenden Ansprüche, wenn das Rechnerprogrammprodukt durch eine Rechenvorrichtung ausgeführt ist.

11. Rechnerprogrammprodukt nach Anspruch 10, gespeichert auf einem rechnerlesbaren Aufzeichnungsmedium.

12. Netzwerkknoten (20) für ein Medienverbreitungsnetzwerk (10), in welchem Mediendaten in Medienbursts an einen Zwischenspeicher (44) eines Medienclients (40) gesendet werden, wobei ein Medienburst von einer Ruhezeit gefolgt ist, in welcher keine Mediendaten gesendet werden, wobei der Netzwerknoten (20) umfasst:
eine Komponente, die konfiguriert ist, einen Füllstand des Medienclientzwischenspeichers (44) zu ermitteln; und
einen Generator (22), der konfiguriert ist, Medienbursts zu erzeugen, enthaltend ein Anpassen eines Mediendatenvolumens des Medienbursts, für jeden von zumindest zwei aufeinanderfolgenden Medienbursts, abhängig vom Füllstand, wobei das Mediendatenvolumen so angepasst ist, dass die Ruhezeit, die dem Medienburst folgt, eine erste Dauer nicht unterschreitet.

13. Medienclient (40) für ein Medienverbreitungsnetzwerk (10), in welchem Mediendaten in Medienbursts von einem Medienserver zum Medienclient (40) gesendet werden, wobei ein Medienburst von einer Ruhezeit gefolgt ist, in welcher keine Mediendaten gesendet werden, wobei der Medienclient umfasst:
einen Zwischenspeicher (44), der zum Zwischenspeichern von empfangenen Mediendaten konfiguriert ist; und
eine Schnittstelle (42), die zum Empfangen von Medienbursts konfiguriert ist, wobei, für jeden von zumindest zwei aufeinanderfolgenden Medienbursts ein Mediendatenvolumen des Medienbursts von einem Füllstand des Zwischenspeichers (44) abhängig ist, und wobei das Mediendatenvolumen so angepasst ist, dass die Ruhezeit, die dem Medienburst folgt, eine erste Dauer nicht unterschreitet.

14. Medienclient nach Anspruch 13, des Weiteren umfassend
ein Steuergerät (52) das angepasst ist, während der Ruhezeit einen Übergang des Medienclients von einem ersten Energieverbrauchszustand in einen zweiten Energieverbrauchszustand einzuleiten, wobei der erste Zustand mit einem höheren Energieverbrauch verbunden ist als der zweite Zustand.

15. Mediendatenclient nach Anspruch 14, des Weiteren umfassend
einen Inaktivitätszeitgeber (50), der an das Steuergerät (50) gekoppelt ist, wobei der Inaktivitätszeitgeber (50) angepasst ist, den Übergang auszulösen.

## Revendications

1. Procédé de fonctionnement d'un noeud de réseau (20) dans un réseau de distribution média (10) dans lequel des données médias sont transmises en rafales médias vers une mémoire tampon (44) d'un client média (40), dans lequel une rafale média est suivie par une période de repos pendant laquelle aucunes données médias ne sont transmises, le procédé comprenant, pour chacune d'au moins deux rafales médias successives le fait de :
déterminer un niveau de remplissage de la mémoire tampon de client média (44) ; et
générer une rafale média, incluant d'ajuster un volume de donnés médias de la rafale média en fonction du niveau de remplissage,
dans lequel le volume de donnés médias est ajusté de sorte que la période de repos suivant la rafale média ne tombera pas au-dessous d'une première durée.

2. Procédé selon la revendication 1, dans lequel
déterminer le niveau de remplissage comprend d'estimer le niveau de remplissage sur la base d'un modèle de mémoire tampon.

3. Procédé selon la revendication 2, dans lequel
le modèle de mémoire tampon prend en compte un volume de données médias transmises et un taux de drainage de mémoire tampon au niveau du client média.

4. Procédé selon une quelconque des revendications précédentes, dans lequel
la rafale média comprend des transports de données média individuels multiples vers le client média.

5. Procédé selon la revendication 4, dans lequel
le niveau de remplissage est déterminé pendant la rafale média et dans lequel le volume de donnés média de la rafale média est ajusté en mettant fin aux transports de donnés médias en fonction du niveau de remplissage.

6. Procédé selon la revendication 4 ou 5, comprenant en outre
de recevoir un accusé de réception de la réception d'un transport de donnés médias, dans lequel l'accusé de réception déclenche le transport de donnés médias suivant.

7. Procédé selon une quelconque des revendications précédentes, dans lequel
à la fin de la rafale média un temporisateur de repos (30) est démarré afin de définir la période de repos, dans lequel après l'expiration du temporisateur de repos (30) la rafale média suivante est générée.

8. Procédé selon une quelconque des revendications précédentes, dans lequel
un premier débit auquel la rafale média est transmise est en moyenne supérieur à un second débit auquel la mémoire tampon de client média (44) est drainée.

9. Procédé de fonctionnement d'un client média (40) dans un réseau de distribution média (10) dans lequel des données médias sont transmises en rafales médias vers une mémoire tampon (44) d'un client média (40), dans lequel une rafale média est suivie par une période de repos pendant laquelle aucunes données médias ne sont transmises, le procédé comprenant, pour chacune d'au moins deux rafales médias successives le fait de :
recevoir une rafale média, dans lequel un volume de donnés média de la rafale média dépend d'un niveau de remplissage de mémoire tampon de client média (44) et dans lequel le volume de donnés médias est ajusté de sorte que la période de repos suivant la rafale média ne tombera pas au-dessous d'une première durée.

10. Produit de programme informatique comprenant des portions de code de programme pour mettre en oeuvre le procédé selon une quelconque des revendications précédentes lorsque le produit de programme informatique est exécuté par un dispositif informatique.

11. Produit de programme informatique selon la revendication 10, mémorisé sur un support d'enregistrement lisible par ordinateur.

12. Noeud de réseau (20) dans un réseau de distribution média (10) dans lequel des données médias sont transmises en rafales médias vers une mémoire tampon (44) d'un client média (40), dans lequel une rafale média est suivie par une période de repos pendant laquelle aucunes données médias ne sont transmises, le noeud de réseau (20) comprenant:
un composant configuré pour déterminer un niveau de remplissage de la mémoire tampon de client média (44) ; et
un générateur (22) configuré pour générer une rafale média, incluant d'ajuster, pour chacune d'au moins deux rafales médias successives, un volume de donnés médias de la rafale média en fonction du niveau de remplissage, dans lequel le volume de donnés médias est ajusté de sorte que la période de repos suivant la rafale média ne tombera pas au-dessous d'une première durée.

13. Client média (40) pour un réseau de distribution média (10) dans lequel des données médias sont transmises en rafales médias d'un serveur média vers le client média (40), dans lequel une rafale média est suivie par une période de repos pendant laquelle aucunes données médias ne sont transmises, le client média comprenant:
une mémoire tampon (44) configuré pour mettre en mémoire tampon des donnés média reçues ; et
une interface (42) configuré pour recevoir des rafales média, dans lequel, pour chacune d'au moins deux rafales médias successives, un volume de donnés média de la rafale média dépend d'un niveau de remplissage de la mémoire tampon (44) et dans lequel le volume de donnés médias est ajusté de sorte que la période de repos suivant la rafale média ne tombera pas au-dessous d'une première durée.

14. Client média selon la revendication 13, comprenant
en outre un contrôleur (52) adapté pour amorcer un transit du client média d'un premier état de consommation de puissance à un second état de consommation de puissance pendant la période de repos, dans lequel le premier état est associé à une consommation de puissance plus élevée que le second état.

15. Clients de donnés médias selon la revendication 14, comprenant en outre
un temporisateur d'inactivité (50) couplé au contrôleur (50), dans lequel le temporisateur d'inactivité (50) est adapté pour déclencher le transit.
